# EUROPEAN PATENT APPLICATION

(11) **EP 1 648 135 A2**
(43) Date of publication of application: **19.04.2006**
(21) Application number: 05022207.4
(22) Date of filing: 12.10.2005
(51) Int. Cl.: H04L 29/06

(54) **Method and apparatus to facilitate use of home agent preference information**

(30) Priority: 14.10.2004 US 965557
(71) Applicant: UTStarcom, Incorporated, Alameda, CA 94502 (US)
(72) Inventor: Bhatia, Ravideep, West Dundee Illinois 60118 (US); Akgun, Ali, Chicago Illinois 60657 (US); Ahluwalia, Mankesh, Hoffman Estates Illinois 60195 (US)
(74) Representative: HOFFMANN EITLE

(57) **Abstract**

A home agent preference control node gathers (11) information regarding available home agents in a given network. This information includes both information regarding present availability and other information (12) (for example, other information as may pertain the relative availability of one home agent with respect to another). The home agent preference control node utilizes (13) such information to determine a respective preference value for at least some, and preferably all of the network's home agents. Following communication of a resultant list (14) that comprises, at least in part, such preference values, the home agents are then able to respond to home agent discovery inquiries from a mobile node with this information. This, in turn, facilitates selection by the mobile node of a home agent that likely represents at least a relatively efficient distribution of system resources.

## Description

### Technical Field

This invention relates generally to network communications and more particularly to the facilitation of home agent allocation and/or selection.

### Background

Mobile Internet Protocol version 6 permits a mobile node to roam from link to link without requiring a change of the mobile node's Internet Protocol version 6 address. A mobile node is addressed by its home address which in turn comprises an Internet Protocol version 6 address as assigned by a router in the home domain of the mobile node that acts as a home agent. Movement of the mobile node away from its home link is therefore transparent to transport and higher-layer protocols and applications.

Most mobile nodes in a third generation (3G) network will not be initially configured with a home agent address, however. Instead, a mobile node dynamically discovers the home agent's global address through a process known as dynamic home agent address discovery. Pursuant to this process, the mobile node transmits an Internet Control Message Protocol version 6 home agent discovery request message using an anycast address. (An anycast address has a property wherein the same address is configured on multiple nodes but a forwarding router will ensure that the packet is received by only one of the nodes that is configured with this address. Therefore only one of the home agents in a network will receive the discovery request and reply to it.) One of the home agent responds with a discovery reply message that comprises addresses for the set of routers that are attached to the mobile node's home link and that are capable of serving as a home agent. (To effect this process, home agents maintain a list of home agents that are present on the link.) The mobile node then selects a home agent from the proffered list. This list is preferably sorted based on the preference level indicated by each home agent.

Such a process serves relatively well to ensure provision of an active home agent to a mobile node. This approach, however, does not serve all needs. For example, such a home agent list would simply reflect the architectural presence of each home agent. Such a list would not, for example, provide any information regarding more subjective matters such as local loading burdens for a given home agent.

To meet such needs, the described process has been further embellished with an ability to indicate a so-called preference for each home agent. In particular, the present process allows a system administrator to manually set a preference value in a corresponding home agent preference field that comprises a part of a corresponding router advertisement. It has also been suggested that the home agent might be configured to dynamically set its home agent preference value as a function of, for example, the number of mobile nodes currently being served by that home agent.

Though such embellishments are helpful, again, not all needs are necessarily suitably met by these prior art practices. As one example, present standards and corresponding comments make no mention of any method by which a home agent might facilitate a more dynamic decision process.

### Brief Description of the Drawings

The above needs are at least partially met through provision of the method and apparatus to facilitate use of home agent preference information described in the following detailed description, particularly when studied in conjunction with the drawings, wherein:

FIG. 1 comprises a flow diagram as configured in accordance with various embodiments of the invention;

FIG. 2 comprises a schematic view of a message format as configured in accordance with various embodiments of the invention;

FIG. 3 comprises a schematic view of a message format as configured in accordance with various embodiments of the invention;

FIG. 4 comprises a schematic view of a message format as configured in accordance with various embodiments of the invention;

FIG. 5 comprises a schematic view of a message format as configured in accordance with various embodiments of the invention;

FIG. 6 comprises a flow diagram as configured in accordance with various embodiments of the invention;

FIG. 7 comprises a block diagram as configured in accordance with various embodiments of the invention;

FIG. 8 comprises a flow diagram as configured in accordance with various embodiments of the invention; and

FIG. 9 comprises a signal flow diagram as configured in accordance with various embodiments of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will also be understood that the terms and expressions used herein have the ordinary meaning as is usually accorded to such terms and expressions by those skilled in the corresponding respective areas of inquiry and study except where other specific meanings have otherwise been set forth herein.

### Detailed Description

Generally speaking, pursuant to these various embodiments, a home agent preference control node receives home agent availability information via, for example, router advertisement messages from home agents in a corresponding network. The home agent preference control node uses this home agent availability information and other information regarding at least one of the home agents to form a corresponding preference value for each of the home agents. The home agent preference control node then transmits home agent list (preferably sorted based on the preference) information to the home agents. This home agent list information identifies the home agents that are available in the network and further sets forth a preference value as corresponds to each of the home agents.

So configured, the home agents can then thereafter provide such home agent list information to mobile nodes to permit the mobile nodes to select a particular home agent as a function, at least in part, of the home agent list information and in particular the preference value information.

The other information referred to above can vary with the needs and/or requirements of a given application. Examples include, but are not limited to, information regarding a number of mobile nodes that are currently being served by a given home agent, an average number of mobile nodes that were served by a given home agent over a predetermined period of time, a value indicative of unallocated (or allocated) resources available to a given home agent, and so forth.

In a preferred approach, the home agent preference control node also receives subsequent updated information from the home agents. This updated information, in turn, permits re-calculation of the preference values. These resultant updated preference values are then provided to the home agents as a substitute for earlier provided information. So configured, pairing of home agents to mobile nodes can be more efficiently and appropriately carried out, both initially and in subsequent times.

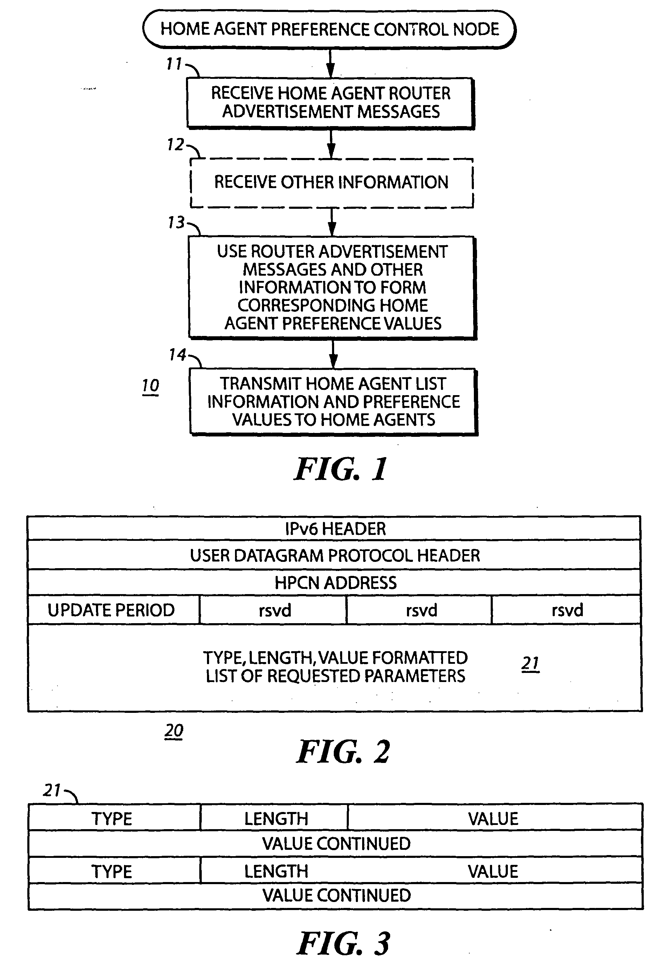

These and other benefits may become more evident upon making a thorough review and study of the following detailed description. Referring now to the drawings, and in particular to FIG. 1, a home agent preference control node receives 11 router advertisement messages from home agents in the corresponding network (those skilled in the art will recognize and understand that a so-called home agent preference control node can be configured as a stand-alone network element or can be functionally and logically distributed over numerous network elements in accord with well understood prior art practice with respect to such architectural choices and opportunities).

In accord with present practice, these router advertisement messages comprise, at least in part, home agent availability information (i.e., a corresponding direct or inferred indication that a given home agent is available within the given network). (In the alternative and/or in addition to gleaning such home agent availability information from such router advertisements, the home agent preference control node can access a list of home agents in the network via other means as may be appropriate or available. For example, such a list can be previously provided to the home agent preference control node by, as one illustration, a network administrator or a corresponding information server when such is available.)

The home agent preference control node also has access to other information regarding the home agents. Pursuant to one optional approach, such other information is received 12, at least in part, from the home agents themselves. For example, pursuant to one approach, the home agent preference control node can transmit a message to the home agents to request such other information and the home agents can respond accordingly via a synchronous or asynchronous message (as may best comport with available resources and transmission protocols in a given instance). Referring momentarily to FIG. 2, such a message 20 can utilize the user datagram protocol and can comprise, in addition to an attendant Internet Protocol version 6 header, a user datagram protocol header, and a home agent preference control node (HPCN) address, a type-length-value formatted list of requested parameters 21 that comprise, at least in part, the other information sought by the home agent preference control node. (These type-length-value tuples can have a format as illustrated in FIG. 3 if desired.)

The other information comprises, in general, information that holds at least some potential as a basis for calculating a preference value for the home agents. The precise nature of such information can and will likely vary from network to network and over time. Some present useful examples comprise:
- a number of mobile nodes currently being served by a given one of the home agents;
- an average number of mobile nodes that were served by a given one of the home agents over a predetermined period of time;
- a value indicative of unallocated resources available to a given one of the home agents to support additional mobile nodes;
- a value indicative of the currently allocated resources in a given one of the home agents.

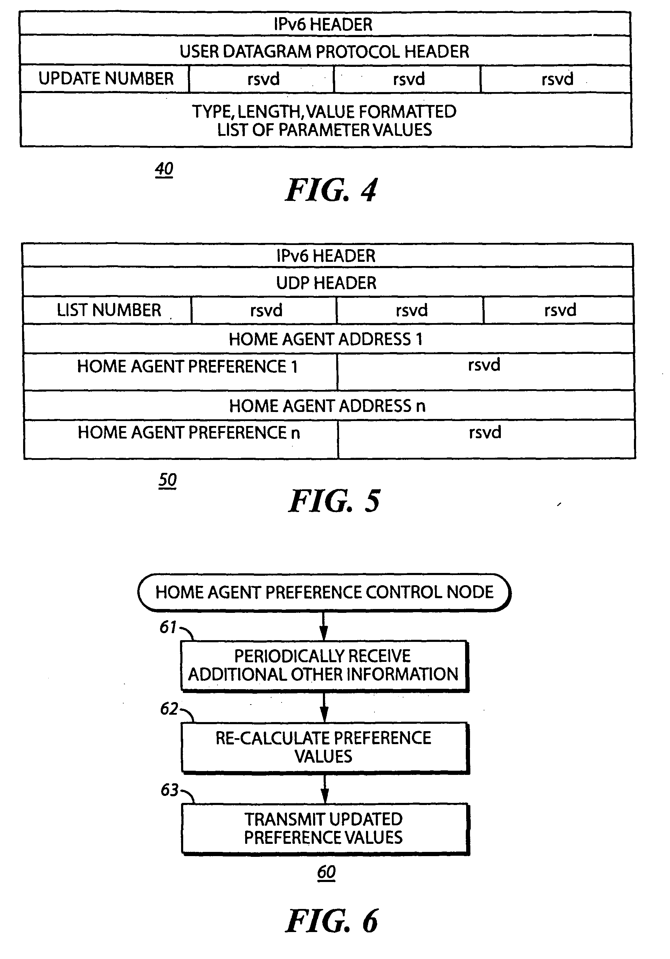

Referring now momentarily to FIG. 4, the home agents can respond to such a request with a reply message 40 that again utilizes user datagram protocol formatting. This reply message 40 can comprise, at least in part, the type-length-value formatted list of parameters as was originally requested by the home agent preference control node.

Referring again to FIG. 1, the home agent preference control node then uses 13 this gathered information to form a corresponding preference value for at least some, and preferably all, of the home agents. This availability information and corresponding preference values are then transmitted 14 to the home agents in the network. Referring momentarily to FIG. 5, this transmission can comprise another user datagram protocol formatted message 50 that preferably enumerates the various home agents (and their corresponding address) along with an indication of their calculated and/or otherwise determined preference value. As illustrated, a first home agent has a home agent preference 1 value associated therewith while an Nth home agent has a home agent preference N associated therewith. (As suggested by the "N," such a message can list any number of home agents as may be available. In the alternative, if desired, multiple messages can be used to convey this information.)

So configured, and as will be shown below, the home agents can then thereafter provide such home agent list information to mobile nodes to permit the mobile nodes to select a particular home agent as a function, at least in part, of the home agent list information.

The above-described process permits preference values for a plurality of home agents to be determined in an informed fashion. As noted above, however, conditions influencing such preference calculations likely will change over time in response to a wide variety of factors and conditions. A preferred approach will therefore support dynamic updating of these preference values. For example, and referring now to FIG. 6, a corresponding process 60 presumes (and/or occasions) periodic receipt 61 of additional or supplemental other information regarding the home agents. This can occur pursuant to a regular schedule or can occur on a more asynchronous or anecdotal fashion. Pursuant to one approach, the home agent preference control node can itself initiate repeated requests for the information of interest. Such repeated requests can be scheduled and/or can be event driven as desired. As one illustrative example, such requests can be repeated at thirty minute intervals during one period of time during the day and at five minute intervals during another time during the day. Pursuant to another approach, the home agent preference control node can specify a periodicity by which each home agent should transmit a message comprising the additional other information. Such a specification could be included, for example, in the original request for information or in one or more of the outbound list messages. Pursuant to yet another approach, one could combine scheduled updates with anecdotal or event-driven requests as may be sourced by the home agent preference control node.

Upon receiving 61 such additional other information, the home agent preference control node can re-calculate 62 some or all of the preference values as a function, at least in part, of the additional other information. By one approach, this re-calculation can be based entirely upon the new information. By another approach, this re-calculation can account, to some desired degree, for historical information in addition to the newly received information. A resultant updated list of home agents and their corresponding preference values can then be transmitted 63 to the home agents as before.

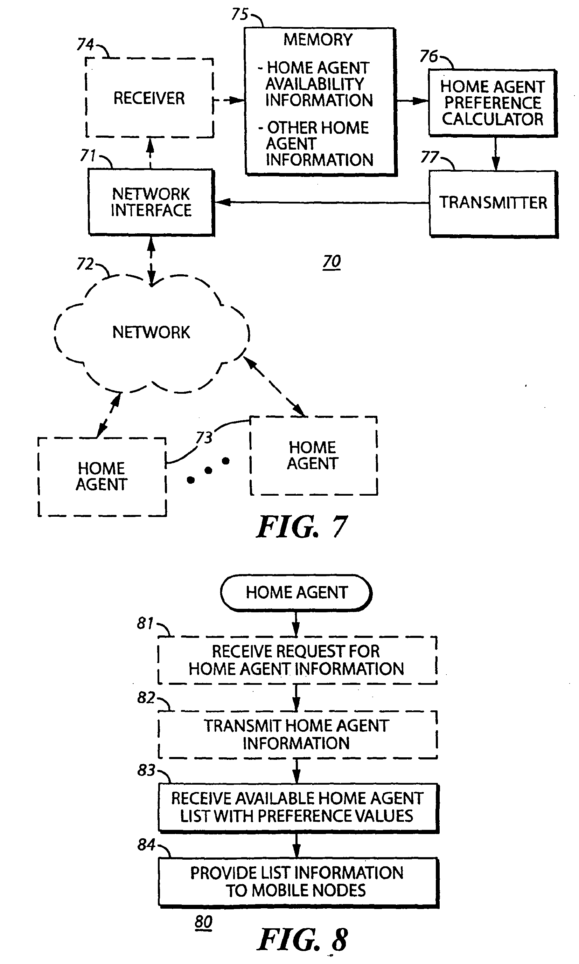

The above-described processes can be realized in various ways depending upon the resources and needs of a given application. With reference to FIG. 7, one illustrative approach comprises a home agent preference control node 70 having a network interface 71 that facilitates operable coupling to a network 72 (such as an intranet or an extranet such as the Internet) and a corresponding plurality of home agents 73. Home agent availability information and other home agent information as received from the home agents 73 by an optional receiver 74 that operably couples to the network interface 71 (or as is partially or wholly obtained from other sources) is retained in a memory 75. (Those skilled in the art will recognize that such a memory 75 can comprise a single stand-alone platform as suggested by the illustration, a multiplicity of platforms, or can be integrated with one or more of the other illustrated components. Such architectural and configuration options are well understood in the art and require no further elaboration here.) This stored information can comprise only current information or can include historical data if desired (to facilitate, for example, use of such historical information when re-determining preference values and/or system audits).

The memory 75 in turn operably couples to a home agent preference calculator 76. The home agent preference calculator 76 can comprise a stand-alone dedicated-purpose platform but will likely more often be integrated with a multi-function fully or partially programmable element component. This home agent preference calculator serves to determine a preference value for each of the plurality of home agents 73 as a function, at least in part, of the home agent availability information and the other home agent information. In a preferred embodiment the home agent preference calculator 76 effects such a calculation on a substantially frequent basis (using, preferably, updated information) to permit availability of relatively fresh preference value information for use by the system.

The home agent preference calculator 76 operably couples to a transmitter 77 and serves to provide the above-described list of available home agents and their corresponding calculated preference values. The transmitter 77 is responsive to receipt of such information and/or to other control inputs and transmits, via the network interface 71, this list to the home agents 73.

The home agent preference control node can be configured as a stand-alone platform, but can also be integrated as a part of other network elements if desired. For examples, a home agent platform or a RADIUS server can each be readily configured to comport with these teachings and serve as an effective home agent preference control node.

Referring now to FIG. 8, a given home agent can be arranged and configured in various ways to meaningfully participate in such processes as are described above. Pursuant to one approach 80, the home agent optionally receives 81 a message comprising a request for home agent information from a home agent preference control node. In such a case, the home agent can transmit 82 a corresponding response that contains the expressly or impliedly requested home agent information. In any event, upon receiving 83 a message comprising a list of available home agents in the network, which list includes the home agent and which list provides a preference value for each of the available home agents including this particular home agent, the home agent can use that list by providing 84 it (or at least relevant portions thereof) to mobiles nodes to thereby facilitate selection of a particular home agent by a given mobile node.

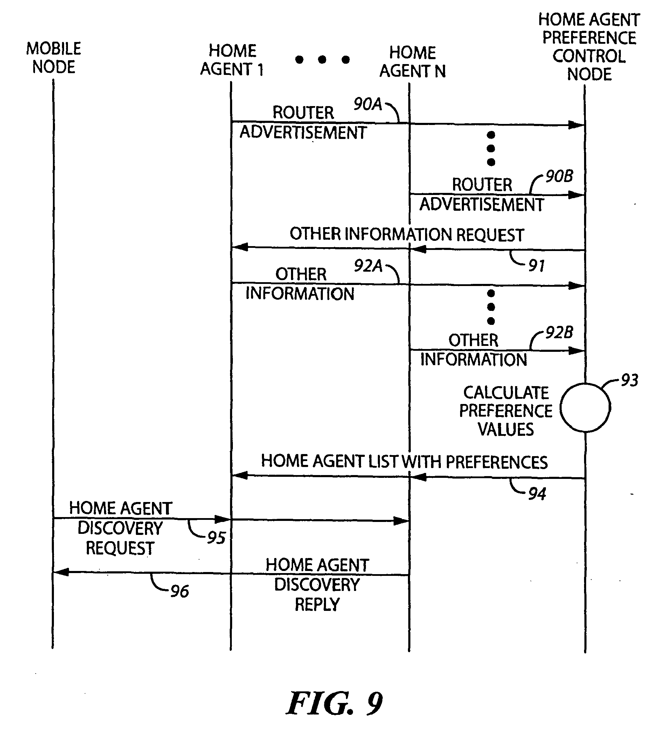

An overall illustration of an application of these teachings appears in FIG. 9. A home agent preference control node receives, in this illustrative example, router advertisements 90A and 90B from the various home agents in the network. Such router advertisements contain home agent availability information as corresponds to each of the home agents. In this illustration, the home agent preference control node transmits a request for other information 91 to the home agents and receives, in response, the other information in corresponding messages 92A and 92B. The home agent preference control node then uses this availability information and other information to calculate 93 the preference values described above for the various home agents. The resultant information is then transmitted to the home agents as a home agent list with corresponding preference values 94. So configured, when a mobile node then transmits a home agent discovery request 95, a particular one of the home agents can respond with a home agent discovery reply message 96 that includes the list described herein.

So configured, the existing preference value mechanism for Internet Protocol version 6 can be significantly leveraged to effect a more dynamic and accurate indication of present network home agent resources. This, in turn, can result in an improved average quality of service experience for an increased number of users.

Those skilled in the art will recognize that a wide variety of modifications, alterations, and combinations can be made with respect to the above described embodiments without departing from the spirit and scope of the invention, and that such modifications, alterations, and combinations are to be viewed as being within the ambit of the inventive concept. For example, upon receiving an updated list as described above, a given home agent may optionally immediately source a router advertisement containing its own new preference value. As another example, when the home agent preference control node fails to receive an update (for X number of opportunities) for a home agent that has previously participated in this process, the home agent preference control node can optionally lower the preference value for that home agent and/or can remove that home agent from the list pending some change in circumstance.

## Claims

1. A method for use in a network having a plurality of home agents comprising:
- receiving router advertisement messages from home agents in the network;
- using the router advertisement messages and other information regarding at least one of the home agents to form a corresponding preference value for at least some of the home agents;
- transmitting home agent list information to the home agents regarding the home agents in the network and the corresponding preference value;
such that the home agents can thereafter provide such home agent list information to mobile nodes to permit the mobile nodes to select a particular home agent as a function, at least in part, of the home agent list information.

2. The method of claim 1 and further comprising:
- receiving at least some of the other information from the home agents.

3. The method of claim 2 wherein receiving at least some of the other information from the home agents further comprises transmitting a message to the home agents to request the other information.

4. The method of claim 2 wherein receiving at least some of the other information from the home agents further comprises receiving an asynchronous message from at least one home agent.

5. The method of claim 4 wherein receiving an asynchronous message from at least one home agent further comprises receiving a plurality of asynchronous messages from at least one home agent as are transmitted by the at least one home agent from time to time.

6. The method of claim 1 wherein the other information comprises at least one of information regarding:
- a number of mobile nodes currently being served by a given one of the home agents;
- an average number of mobile nodes that were served by a given one of the home agents over a predetermined period of time;
- a value indicative of unallocated resources available to a given one of the home agents to support additional mobile nodes;
- a value indicative of the currently allocated resources in a given one of the home agents.

7. The method of claim 1 wherein a home agent preference control node serves to receive the router advertisement messages and the other information from the home agents, form the corresponding preference value, and transmit the home agent list information.

8. A method for use in a network having a plurality of home agents comprising:
- using home agent availability information and other information regarding at least one of the home agents to form a corresponding preference value for each of the home agents;
- transmitting home agent list information to the home agents regarding the home agents in the network and the corresponding preference value for each of the home agents;
such that the home agents can thereafter provide such home agent list information to mobile nodes to permit the mobile nodes to select a particular home agent as a function, at least in part, of the home agent list information.

9. The method of claim 8 and further comprising:
- transmitting a message to the home agents to request the other information.

10. The method of claim 8 and further comprising:
- receiving the other information from the home agents.

11. The method of claim 8 and further comprising:
- receiving router advertisement messages from home agents in the network.

12. The method of claim 11 and further comprising:
- using the router advertisement messages to develop the home agent availability information.

13. A home agent preference control node comprising:
- a network interface;
- a memory having data stored therein regarding:
- home agent availability information;
- other home agent information;
- a home agent preference calculator that is operably coupled to the memory and that is responsive to the home agent availability information and the other home agent information and that has a home agent preference value output;
- a transmitter operably coupled to the home agent preference value output and to the network interface.

14. The home agent preference control node of claim 13 wherein the home agent availability information comprises a list of home agents that are available in a given network.

15. The home agent preference control node of claim 14 wherein the other home agent information comprises at least one of:
- a number of mobile nodes currently being served by a given one of the home agents;
- an average number of mobile nodes that were served by a given one of the home agents over a predetermined period of time;
- a value indicative of unallocated resources available to a given one of the home agents to support additional mobile nodes;
- a value indicative of the currently allocated resources in a given one of the home agents.

16. The home agent preference control node of claim 13 wherein the home agent preference calculator further comprises calculator means for determining a preference value for each of a plurality of home agents as a function, at least in part, of the home agent availability information and the other home agent information.

17. The home agent preference control node of claim 16 wherein the calculator means are further for determining the preference value for each of a plurality of home agents on a substantially frequent basis.

18. The home agent preference control node of claim 13 wherein the home agent preference value output comprises a list of available home agents with corresponding preference values.

19. The home agent preference control node of claim 18 wherein the home agent preference calculator further comprises output means for causing the transmitter to transmit the home agent preference value output to the available home agents.

20. The home agent preference control node of claim 13 wherein the home agent preference control node comprises at least one of:
- a stand-alone platform;
- a home agent platform;
a RADIUS server.

21. A method for use by a home agent in a network comprising:
- receiving a message comprising a list of available home agents in the network, which list includes the home agent and which list provides a preference value for each of the available home agents including the home agent;
- providing at least portions of the list to mobile nodes to thereby facilitate selection of a particular home agent by a given mobile node.

22. The method of claim 21 and further comprising:
- receiving a message comprising a request for home agent information from a home agent preference control node;
- transmitting the home agent information to the home agent preference control node.

23. The method of claim 22 wherein the home agent information comprises at least one of:
- a number of mobile nodes currently being served by the home agent;
- an average number of mobile nodes that were served by the home agent over a predetermined period of time;
- a value indicative of unallocated resources available to the home agent to support additional mobile nodes;
- a value indicative of the currently allocated resources in a given one of the home agents.

24. The method of claim 21 wherein receiving a message comprising a list of available home agents in the network further comprises receiving the message from a home agent preference control node.

25. A method for use in a network having a plurality of Home Agents comprising:
- accessing a list of the Home Agents in the network;
- transmitting a message to each Home Agent in the network to request other information from each Home Agent;
- receiving a message from each Home Agent in the network containing the other information as corresponds to each the Home Agents;
- calculating a preference value for each Home Agent using the other information;
- transmitting a message to each Home Agent comprising the list and incorporating the preference values, such that the Home Agents can thereafter provide such Home Agent list information to mobile nodes to permit the mobile nodes to select a particular Home Agent as a function, at least in part, of the preference values;
- periodically thereafter.
- receiving a message from each Home Agent containing the additional other information;
- re-calculating the preference values as a function, at least in part, of the additional other information;
- transmitting an updated list of the Home Agents and their preference values to the Home Agents.

26. The method of claim 25 wherein accessing a list of the Home Agents in the network further comprises:
- receiving router advertisement messages from home agents in the network;
- using the router advertisement messages to form the list of the Home Agents in the network.

27. The method of claim 25 wherein accessing a list of the Home Agents in the network further comprises accessing a previously provided list

28. The method of claim 25 wherein periodically receiving a message from each Home Agent containing the additional other information further comprises periodically thereafter transmitting a message to each Home Agent in the network, the message requesting additional other information from each Home Agent.

29. The method of claim 25 wherein periodically receiving a message from each Home Agent containing the additional other information further comprises transmitting a message to each Home Agent in the network to specify a periodicity by which each Home Agent should transmit a message comprising the additional other information.

30. The method of claim 25 wherein periodically receiving a message from each Home Agent containing the additional other information further comprises:
- transmitting a first message to each Home Agent in the network to specify a periodicity by which each Home Agent should transmit a message comprising the additional other information; and
- transmitting a second message to each Home Agent in the network, the message requesting additional other information from each Home Agent as a specific response to the second message.
